# FASCICULE DE BREVET EUROPEEN

(11) **EP 1 151 222 B1**
(45) Date de publication et mention de la délivrance du brevet: **31.03.2004**
(21) Numéro de dépôt: 00901669.2
(22) Date de dépôt: 28.01.2000
(51) Int. Cl.: F16L 59/02, F16L 59/08

(54) **GAINE DE PROTECTION THERMIQUE ET SON PROCEDE DE FABRICATION**
WÄRMESCHUTZHÜLSE UND HERSTELLUNGSVERFAHREN
HEAT-REFLECTIVE PROTECTIVE SLEEVE AND METHOD FOR MAKING SAME

(30) Priorité: 01.02.1999 FR 9901099
(43) Date de publication de la demande: 07.11.2001
(73) Titulaire: Federal Mogul Systems Protection Group, 60800 Crépy-en-Valois (FR)
(72) Inventeur: LOUART, Frédéric, F-60700 Pontpoint (FR); FERRAND, Jean, F-60800 Crépy-en-Valois (FR); DROMAIN, Lionel, F-60800 Crépy-en-Valois (FR); STEITZ, Dirk, F-60800 Crépy-en-Valois (FR)
(74) Mandataire: Santarelli
(86) Numéro de dépôt international: PCT/FR2000/000202
(87) Numéro de publication internationale: WO 2000/046543

(56) Documents cités:
- EP-A- 0 157 956
- GB-A- 2 249 151
- US-A- 5 660 899
- US-A- 5 843 542

## Description

La présente invention concerne une gaine de protection thermique et son procédé de fabrication.

Des gaines de protection thermiques sont utilisées couramment pour isoler des conduites de fluides, par exemple dans des moteurs de véhicules automobiles, notamment dans les circuits hydrauliques, les lignes de transport de carburant, de liquide de freins, de liquide de refroidissement, ou encore d'air conditionné.

De telles gaines de protection thermique comportent un substrat recouvert d'une matière réfléchissante adaptée à réfléchir le rayonnement infrarouge.

Le substrat doit être suffisamment flexible pour s'adapter aux différentes formes de conduites et couvrir celles-ci sans former de bourrelet.

Pour recouvrir le substrat d'une matière réfléchissante, une première technique consiste à l'enduire d'un revêtement contenant des particules d'aluminium par exemple, directement sur la surface externe du substrat.

Un tel revêtement aluminisé conserve une bonne souplesse au substrat de la gaine de protection mais présente des propriétés de réflexion limitées. En effet, le liant utilisé pour fixer les particules d'aluminium sur la surface du substrat absorbe une partie des radiations thermiques, limitant ainsi le pouvoir réfléchissant du revêtement aluminisé.

Une seconde technique consiste à fixer sur la surface externe du substrat une feuille de matière réfléchissante, telle qu'une feuille d'aluminium ou un film aluminisé.

Ces feuilles et films confèrent une meilleure protection thermique par la gaine mais manquent de flexibilité. En particulier, les feuilles ont tendance à se déchirer lorsque la gaine est déformée, et notamment lorsqu'elle est étirée.

Le brevet US 5 660 899 décrit ainsi une gaine de protection thermique comprenant un substrat formé d'un tube plastique annelé recouvert d'une structure laminée collée en tout point de la surface externe du substrat.

La structure laminée et le substrat ont ainsi une forme identique de tube annelé, la surface de contact entre la structure laminée et le substrat étant totale.

La présente invention a pour but de proposer une gaine de protection thermique à la fois souple et déformable, ayant des propriétés de réflexion de la chaleur satisfaisantes.

La gaine de protection thermique visée par l'invention comporte un substrat et une feuille en matière réfléchissante fixée sur ce substrat, le substrat étant déformable élastiquement à partir d'une position de repos.

La feuille est plissée sur le substrat dans cette position de repos et les plis de la feuille sont irréguliers en forme et en orientation.

Ainsi la feuille de matière réfléchissante est plissée sur le substrat élastique afin de ne pas gêner la déformation de la gaine de protection thermique. Cette dernière peut donc être mise en place sans problème sur des conduites de formes variées, et notamment des conduites coudées.

En effet, la feuille, formant des plis sur le substrat, n'est en contact qu'en certains points avec la surface externe du substrat et a une forme externe différente de celle du substrat.

La structure plissée de la feuille de matière réfléchissante permet d'absorber la déformation de la gaine, la feuille de matière réfléchissante se plissant davantage ou au contraire se déplissant lorsque la gaine est comprimée ou étirée.

Les plis de la feuille de matière réfléchissante sur le substrat sont adaptés de manière avantageuse à former des réserves d'air qui améliorent encore l'isolation thermique des conduites protégées par la gaine.

Selon une caractéristique préférée de l'invention, le substrat présente une surface externe pourvue d'ouvertures, la feuille étant plissée en regard de ces ouvertures.

Ainsi, lors de la déformation élastique de la gaine, la forme des ouvertures est modifiée et la feuille de matière réfléchissante peut être plissée davantage ou au contraire déplissée en regard de ces ouvertures.

De préférence, la feuille de matière réfléchissante est plissée à l'intérieur des ouvertures.

Cette caractéristique permet d'améliorer encore la résistance mécanique des gaines de protection thermiques, la feuille ne formant sensiblement pas de plis en saillie sur la surface extérieure de la gaine. La gaine de protection thermique présente ainsi une résistance accrue à l'usure par contact.

La présente invention concerne également, selon un autre aspect, un procédé de fabrication d'une gaine de protection comportant un substrat et une feuille de matière réfléchissante adaptée à être fixée sur ce substrat.

Conformément à l'invention, ce procédé de fabrication comporte les étapes suivantes :
- expansion élastique du substrat à partir d'une position de repos ;
- fixation de la feuille de matière réfléchissante sur le substrat expansé ; et
- rétraction élastique du substrat dans ladite position de repos.

Ainsi, la fixation de la feuille de matière réfléchissante directement sur le substrat expansé permet, lors de la rétraction élastique de ce substrat, de former les plis.

On utilise ainsi les propriétés élastiques du substrat pour former les plis dans la feuille en matière réfléchissante.

Selon une caractéristique avantageuse de l'invention, la rétraction du substrat recouvert de la feuille en matière réfléchissante est forcée au moyen de rouleaux adaptés à maintenir appliquée cette feuille sur le substrat.

Les rouleaux permettent ainsi de maintenir la feuille en contact avec la surface extérieure du substrat même lorsque celui-ci se rétracte, notamment dans sa dimension radiale.

Selon une caractéristique préférée de l'invention, la feuille est plissée à l'intérieur d'ouvertures du substrat lors de l'étape de rétraction.

Comme décrit précédemment, les plis formés par la feuille sont réalisés à l'intérieur des ouvertures du substrat et non en saillie sur la gaine de protection thermique.

Selon une caractéristique avantageuse de l'invention, le substrat comprend des fils thermorétractables tressés ou tricotés, et, à l'étape de rétraction du substrat, la gaine est chauffée de façon à obtenir une rétraction des fils thermorétractables.

La rétraction thermique de la gaine facilite encore la formation des plis de la feuille sur le substrat.

D'autres particularités et avantages de l'invention apparaîtront encore dans la description ci-après.

Aux dessins annexés, donnés à titre d'exemple non limitatif :
- la figure 1 est une vue de face d'une gaine de protection thermique conforme à un premier mode de réalisation de l'invention;
- la figure 2A est une vue en perspective d'une portion de la gaine de la figure 1 ;
- la figure 2B est une section transversale de la portion de gaine illustrée à la figure 2A ;
- la figure 3 est une vue en perspective d'une gaine de protection thermique conforme à un deuxième mode de réalisation de l'invention;
- la figure 4 est une vue en perspective d'une gaine de protection thermique conforme à un troisième mode de réalisation de l'invention ;
- la figure 5 est une vue en coupe longitudinale de la gaine de protection thermique de la figure 4 ;
- la figure 6 illustre le procédé de fabrication conforme à un premier mode de réalisation de l'invention ;
- la figure 7 représente schématiquement des rouleaux utilisés dans le procédé de fabrication conforme à l'invention ;
- la figure 8 illustre le procédé de fabrication conforme à un deuxième mode de réalisation ; et
- la figure 9 illustre l'étape de rétraction du procédé de fabrication dans un mode de réalisation préféré de l'invention.

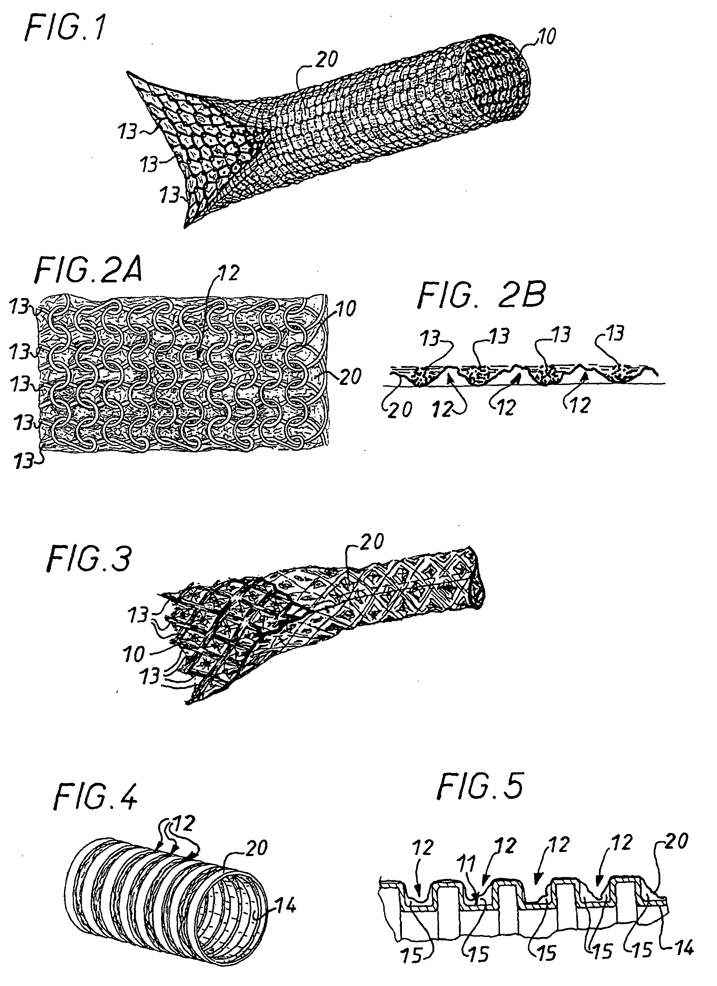

On va décrire tout d'abord, en référence aux figures 1, 2A et 2B, une gaine de protection thermique selon un premier mode de réalisation de l'invention.

Cette gaine comporte un substrat 10 et une feuille de matière réfléchissante 20 fixée sur le substrat 10.

Ce substrat est tubulaire et est formé de fils 13 tricotés dans cet exemple.

Grâce à la structure tricotée du substrat, celui-ci possède une capacité d'expansion élastique longitudinale et radiale. Il est ainsi déformable élastiquement ce qui facilite sa mise en place sur les conduites à protéger et est adaptable à des formes diverses de conduites.

Le textile peut être tricoté directement sous forme tubulaire, pour former un substrat tubulaire 10, ou être tricoté à plat et seulement ensuite enroulé en forme de tube.

N'importe quelle matière brute peut être utilisée pour former les fils, et notamment des fibres de verre, des fibres en polyamide, ou des fibres en polyester.

Le substrat 10 est ainsi en textile, avec des ouvertures 12 entre les fils 13.

Comme illustré à la figure 1, le substrat 10 présente en effet une surface externe pourvue d'ouvertures 12, grâce aux mailles réalisées par les fils tricotés 13.

Conformément à l'invention, une feuille de matière réfléchissante 20 est fixée sur le substrat. Cette feuille 20 forme des plis sur la surface externe du substrat 10 dans la position de repos illustrée à la figure 1.

Comme mieux représenté aux figures 2A et 2B, la feuille est fixée sur les fibres 13 du substrat 10 et est plissée à l'intérieur des ouvertures 12, existant entre les fils tricotés 13.

La feuille 20 forme ainsi des petits plis irréguliers dans les ouvertures 12, disposés dans toutes les directions sur la surface externe du substrat 10.

Cette feuille de matière réfléchissante 20 est par exemple en tissu de fibres de verre aluminisé. Elle n'est donc en elle-même pas déformable élastiquement, mais grâce à sa structure en plis sur le substrat 10, elle ne gêne pas la déformation élastique de ce dernier et par conséquent la déformation élastique de la gaine de protection thermique. Les plis de la feuille de matière réfléchissante 20 évitent à cette dernière de se déchirer.

Lorsque cette gaine de protection thermique telle qu'illustrée aux figures 1, 2A et 2B est placée sur une conduite de transport de fluide, telle qu'une conduite hydraulique par exemple, les plis de la feuille de matière réfléchissante 20 situés au niveau des ouvertures 12 du substrat 10 forment des réserves ou poches d'air sur la surface externe de la conduite et améliore ainsi son isolation thermique vis-à-vis des sources de chaleur avoisinantes.

Bien entendu, le substrat 10 pourrait également être réalisé en matières textiles diverses, et notamment être formé de fils tressés 13 comme illustré à la figure 3.

Les fils utilisés peuvent être des monofilaments ou des multifilaments et le textile ainsi tressé comporte de préférence un mélange de mono et multifilaments qui lui procure à la fois une bonne résistance mécanique et une grande élasticité.

Dans ce cas, l'expansion élastique peut être radiale, lorsque l'on comprime longitudinalement le substrat tressé, ou longitudinale, lorsque l'on étire longitudinalement le substrat tressé.

On va décrire à présent, en référence aux figures 4 et 5, une gaine de protection thermique conforme à un troisième mode de réalisation de l'invention.

Dans cet exemple, le substrat est formé d'un tube de plastique annelé 14.

Ce tube plastique annelé peut être fendu longitudinalement avant la pose de la feuille de matière réfléchissante 20.

Ce substrat 14 présente une surface externe 11 pourvue d'ouvertures 12, au niveau de creux annulaires 12 du tube annelé 14.

Comme bien illustré à la figure 5, une feuille de matière réfléchissante 20 fixée sur la surface externe 11 du substrat 14 est plissée en regard des ouvertures 12, à l'intérieur des creux annulaires 12.

De par sa structure annelée, le substrat 14 possède une capacité d'expansion élastique longitudinale.

Ainsi, lorsqu'il est étiré dans la longueur, sa déformation notamment au niveau des creux annulaires 12 est rendue possible grâce à la structure en plis de la feuille de matière réfléchissante 20 dans ces creux annulaires 12.

Dans ce mode de réalisation également, comme illustré à la figure 5, les plis formés par la feuille de matière réfléchissante 20 à l'intérieur des creux annulaires 12 créent des réserves ou poches d'air 15 sur la surface externe 11 du substrat 10. Ces réserves d'air 15 améliorent encore la capacité d'isolation thermique procurée par la gaine sur une conduite.

Les plis formés dans les creux annulaires 12 sont également irréguliers en forme et en orientation dans les creux annulaires 12.

Les gaines de protection des différents modes de réalisation peuvent éventuellement être fendues longitudinalement pour faciliter leur mise en place sur les conduites. Cette découpe longitudinale est facilitée pour le substrat annelé lorsque celui-ci est fendu longitudinalement avant la pose de la feuille réfléchissante.

Ces gaines présentent, de manière non limitative, un diamètre interne compris entre 5 mm et 65 mm.

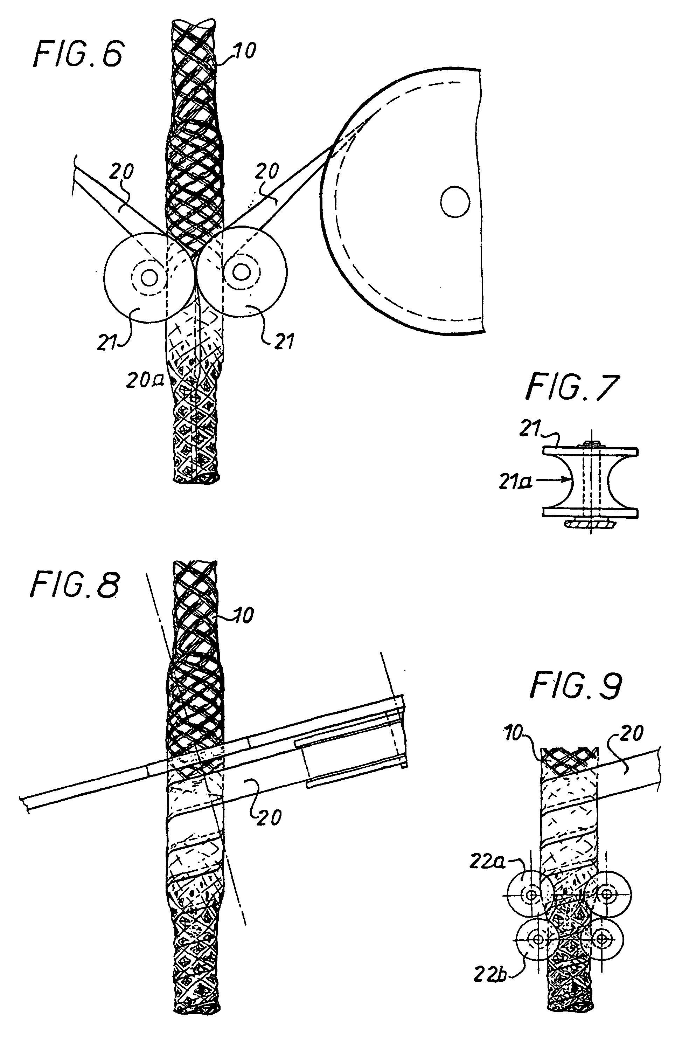

On va décrire à présent un procédé de fabrication d'une gaine de protection thermique conforme à l'invention, en référence tout d'abord à la figure 6.

Dans l'exemple, on considère que le substrat 10 est un textile tressé et tubulaire. Bien entendu, un procédé de fabrication analogue peut être utilisé pour un substrat différent, et notamment en forme de tube annelé 14, de préférence fendu longitudinalement, ou en textile tricoté.

Ce procédé de fabrication comporte tout d'abord une étape d'expansion élastique du substrat 10 à partir d'une position de repos.

Ici, l'expansion élastique du substrat tressé 10 est radiale.

Cette expansion élastique du substrat peut être réalisée sur une ligne en continu en faisant circuler le substrat 10 sur un mandrin cylindrique de diamètre supérieur au diamètre intérieur du substrat 10 au repos.

Dans le cas d'une structure tricotée, comme illustré aux figures 1, 2A et 2B, l'expansion élastique sera réalisée à la fois en étirant le substrat 10 longitudinalement et radialement pour augmenter sa longueur et son rayon.

Dans une deuxième étape du procédé de fabrication la feuille de matière réfléchissante 20 est fixée sur le substrat expansé 10.

Dans cet exemple de réalisation, la feuille en matière réfléchissante 20 est appliquée sur le substrat 10 dans le sens de la longueur de ce substrat 10, par lamination.

lci, et de manière non limitative, deux bandes de matière réfléchissante 20 sont fixées sur deux faces opposées du substrat expansé 10.

Comme illustré à la figure 7, des rouleaux 21 de profil concave 21 a, sont adaptés respectivement à appliquer une bande de matière réfléchissante sur une demi-circonférence du substrat expansé 10.

On observera à la figure 6 une légère zone de chevauchement 20a permettant un parfait raccordement des deux bandes de matière réfléchissante 20 sur le substrat 10.

Bien entendu, un nombre différent de bandes et de rouleaux 21 pour appliquer celles-ci sur le substrat 10 pourrait être utilisé, et notamment quatre rouleaux disposés en quadrature autour du substrat tubulaire 10 et par paires dans deux plans transversaux décalés sur la longueur du substrat tubulaire 10.

Comme illustré à la figure 8, lors de la fixation de la feuille de matière réfléchissante 20 sur le substrat expansé 10, cette feuille 20 pourrait également être appliquée en hélice autour du substrat 10.

La feuille de matière réfléchissante 20 est fixée au moyen d'un adhésif sur le substrat 10.

De manière classique, cet adhésif peut être une colle thermoplastique ou thermodurcissable ou encore être un adhésif sensible à la pression.

Lorsque l'adhésif doit être chauffé pour coller la feuille de matière réfléchissante 20 sur le substrat 10, on peut utiliser des jets d'air chaud ou encore des rouleaux 21 chauffés.

Un adhésif double-face peut être appliqué sur la feuille de matière réfléchissante 20 avant sa fixation sur le substrat 10. Alternativement, un adhésif double-face peut être appliqué directement pendant la lamination de la feuille de matière réfléchissante 20 sur le substrat 10, en étant inséré entre cette feuille 20 et le substrat 10.

Une étape de rétraction élastique du substrat 10 dans sa position de repos est ensuite mise en oeuvre, à la sortie du mandrin utilisé pendant l'expansion et la fixation de la feuille en matière réfléchissante 20.

Cette rétraction élastique peut être libre et obtenue par le simple retour élastique du substrat étiré jusqu'à sa position de repos.

Comme illustré à la figure 9, cette rétraction du substrat 10 recouvert de la feuille en matière réfléchissante 20 peut être forcée au moyen de rouleaux 22a, 22b adaptés à maintenir appliquée cette feuille 20 sur le substrat 10.

Dans cet exemple de réalisation, on utilise deux paires de rouleaux 22a et 22b disposées le long du trajet de la gaine de protection thermique, en sortie du mandrin.

Les rouleaux 22a et 22b ont un profil concave semi-circulaire analogue à celui des rouleaux 21 utilisés lors de la fixation de la feuille 20 et illustrés sur la figure 7.

Le rayon du profil semi-circulaire des rouleaux 22a et 22b est décroissant dans le sens de parcours de la gaine de protection thermique en sortie du mandrin, pour s'adapter à la rétraction radiale du substrat élastique 10.

En outre, la vitesse des rouleaux 22a, situés en amont dans le sens de circulation de la gaine de protection thermique en sortie du mandrin, est supérieure à la vitesse des rouleaux 22b situés en aval.

Ce rapport de vitesse permet d'assurer une certaine rétraction en longueur du substrat 10 en sortie du mandrin

Les rouleaux 22a et 22b facilitent ainsi la rétraction élastique du substrat 10 et l'adhésion de la feuille de matière réfléchissante 20 sur ce substrat 10.

En outre, la feuille 20 est introduite et plissée à l'intérieur des ouvertures du substrat lors de cette étape de rétraction de telle sorte que les plis ne sont pas formés en saillie sur le substrat 10 mais au contraire dans les ouvertures 12.

De préférence, lorsque le substrat comprend des fils thermorétractables tressés ou tricotés, à l'étape de rétraction du substrat 10, la gaine peut être chauffée de façon à obtenir une rétraction de ces fils thermorétractables.

Les rouleaux 22a et 22b utilisés lors de cette étape de rétraction peuvent ainsi être chauffés.

On obtient grâce à l'invention une gaine de protection thermique présentant une bonne capacité d'expansion élastique limitée seulement par l'expansion élastique du substrat 10 lui-même ou encore le déplissement de la feuille de matière réfléchissante 20.

Bien entendu, de nombreuses modifications pourraient être apportées à l'exemple de réalisation décrit ci-dessus sans sortir du cadre de l'invention.

En particulier, lors de l'étape d'expansion, le substrat peut être étiré longitudinalement et/ou radialement.

En outre, lors de la rétraction élastique du substrat, la gaine de protection thermique pourrait circuler sur un trajet formé de tiges courbes dans toutes les directions de l'espace pour assurer une rétraction du substrat 10 et un plissage de la feuille de matière réfléchissante 20 uniformes.

Le nombre de rouleaux 22a, 22b utilisés lors de la rétraction de la gaine peut être inférieur ou supérieur aux deux paires de rouleaux 22a, 22b décrits dans l'exemple de réalisation ci-dessus.

La feuille de matière réfléchissante utilisée peut être un film réalisé en tout polymère synthétique métallisé, et notamment chromé.

## Revendications

1. Gaine de protection thermique comportant un substrat (10) et une feuille de matière réfléchissante (20) fixée sur le substrat (10, 14), le substrat (10, 14) étant déformable élastiquement à partir d'une position de repos, la feuille (20) étant plissée sur le substrat (10, 14) dans ladite position de repos, **caractérisée en ce que** les plis de la feuille (20) sont irréguliers en forme et en orientation.

2. Gaine de protection conforme à la revendication 1, **caractérisée en ce que** le substrat (10, 14) présente une surface externe (11) pourvue d'ouvertures (12), la feuille (20) étant plissée en regard desdites ouvertures (12).

3. Gaine de protection conforme à la revendication 2, **caractérisée en ce que** la feuille (20) est plissée à l'intérieur des ouvertures (12).

4. Gaine de protection conforme à l'une des revendications 1 à 3, **caractérisée en ce que** les plis de la feuille (20) sont adaptés à former des réserves d'air (15).

5. Gaine de protection conforme à l'une des revendications 1 à 4, **caractérisée en ce que** le substrat (10) est en textile et comprend des ouvertures (12) entre des fils (13) de textile, la feuille (20) étant plissée en regard desdites ouvertures (12).

6. Gaine de protection conforme à la revendication 5, **caractérisée en ce que** le substrat (10) est formé de fils (13) tressés ou tricotés.

7. Gaine de protection conforme à la revendication 6, **caractérisée en ce que** la feuille en matière réfléchissante (20) est plissée entre les fils (13) tressés ou tricotés.

8. Gaine de protection conforme à l'une des revendications 1 à 4, **caractérisée en ce que** le substrat est un tube plastique annelé (14).

9. Gaine de protection conforme à la revendication 8, **caractérisée en ce que** le tube plastique annelé (14) est fendu longitudinalement.

10. Gaine de protection conforme à la revendication 8 ou 9, **caractérisée en ce que** la feuille (20) est plissée à l'intérieur de creux annulaires (12) du tube annelé (14).

11. Gaine de protection conforme à l'une des revendications 1 à 10, **caractérisée en ce que** le substrat (10, 14) est tubulaire.

12. Gaine de protection conforme à l'une des revendications 1 à 11, **caractérisée en ce que** le substrat (10, 14) possède une capacité d'expansion élastique longitudinale et/ou radiale.

13. Gaine de protection conforme à l'une des revendications 1 à 12, **caractérisée en ce que** la feuille de matière réfléchissante (20) est en tissu de fibres de verre aluminisé.

14. Procédé de fabrication d'une gaine de protection comportant un substrat (10, 14) et une feuille de matière réfléchissante (20) adaptée à être fixée sur ledit substrat (10, 14), **caractérisé en ce qu'**il comporte les étapes suivantes :
- expansion élastique du substrat (10, 14) à partir d'une position de repos;
- fixation de la feuille de matière réfléchissante (20) sur le substrat expansé (10, 14) ; et
- rétraction élastique du substrat (10, 14) dans ladite position de repos.

15. Procédé de fabrication conforme à la revendication 14, **caractérisé en ce qu'**à l'étape d'expansion, le substrat (10, 14) est étiré longitudinalement et/ou radialement.

16. Procédé de fabrication conforme à l'une des revendications 14 ou 15, **caractérisé en ce que** la rétraction du substrat (10, 14) recouvert de la feuille en matière réfléchissante (20) est forcée au moyen de rouleaux (22a, 22b) adaptés à maintenir ladite feuille (20) appliquée sur le substrat (10, 14).

17. Procédé de fabrication conforme à l'une des revendications 14 à 16, **caractérisé en ce que** la feuille (20) est plissée à l'intérieur d'ouvertures (12) du substrat (10, 14) lors de l'étape de rétraction.

18. Procédé de fabrication conforme à l'une des revendications 14 à 17, **caractérisé en ce que** lors de l'étape de fixation, la feuille en matière réfléchissante (20) est appliquée dans la longueur du substrat (10, 14).

19. Procédé de fabrication conforme à l'une des revendications 14 à 17, **caractérisé en ce que** la feuille en matière réfléchissante (20) est appliquée en hélice autour du substrat (10, 14).

20. Procédé de fabrication conforme à l'une des revendications 14 à 19, **caractérisé en ce qu'**à l'étape de fixation, la feuille en matière réfléchissante (20) est fixée par un adhésif sur le substrat (90, 14).

21. Procédé de fabrication conforme à l'une des revendications 14 à 20, **caractérisé en ce que** le substrat (10) comprend des fils thermorétractables (13) tressés ou tricotés, et **en ce qu'**à l'étape de rétraction du substrat (10), la gaine est chauffée de façon à obtenir la rétraction des fils thermorétractables (13).

## Claims

1. A thermal protection sheath comprising a substrate (10) and a reflective sheet (20) fixed to the substrate (10, 14), the substrate (10, 14) being elastically deformable from a relaxed configuration, the sheet (20) being pleated on the substrate (10, 14) in said relaxed configuration, **characterized in that** the pleats in the sheet (20) are irregularly shaped and oriented.

2. A protection sheath according to claim 1, **characterized in that** the substrate (10, 14) has an outside surface (11) provided with openings (12), the sheet (20) being pleated opposite said openings (12).

3. A protection sheath according to claim 2, **characterized in that** the sheet (20) is pleated inside the openings (12).

4. A protection sheath according to one of claims 1 to 3, **characterized in that** the pleats in the sheet (20) are adapted to form reserves of air (15).

5. A protection sheath according to one of claims 1 to 4, **characterized in that** the substrate (10) is made of textile and comprises openings (12) between textile threads (13), the sheet (20) being pleated facing said openings (12).

6. A protection sheath according to claim 5, **characterized in that** the substrate (10) is formed of braided or knitted threads (13).

7. A protection sheath according to claim 6, **characterized in that** the reflective sheet (20) is pleated between the braided or knitted threads (13).

8. A protection sheath according to one of claims 1 to 4, **characterized in that** the substrate is a corrugated plastics material tube (14).

9. A protection sheath according to claim 8, **characterized in that** the corrugated plastics material tube (14) is slit longitudinally.

10. A protection sheath according to claim 8 or claim 9, **characterized in that** the sheet (20) is pleated inside annular recesses (12) of the corrugated tube (14).

11. A protection sheath according to one of claims 1 to 10, **characterized in that** the substrate (10, 14) is tubular.

12. A protection sheath according to one of claims 1 to 11, **characterized in that** the substrate (10, 14) can be stretched elastically in the longitudinal and/or radial direction.

13. A protection sheath according to one of claims 1 to 12, **characterized in that** the reflective sheet (20) is a fabric of aluminized glass fibers.

14. A method of manufacturing a protection sheath comprising a substrate (10, 14) and a reflective sheet (20) adapted to be fixed to said substrate (10, 14), **characterized in that** it comprises the following steps:
- elastically stretching the substrate (10, 14) from a relaxed configuration;
- fixing the reflective sheet (20) to the stretched substrate (10, 14); and
- elastically shrinking the substrate (10, 14) into said relaxed configuration.

15. A fabrication method according to claim 14, **characterized in that**, in the stretching step, the substrate (10, 14) is stretched longitudinally and/or radially.

16. A fabrication method according to either claim 14 or claim 15, **characterized in that** the shrinking of the substrate (10, 14) covered with the reflective sheet (20) is forced by means of rollers (22a, 22b) adapted to hold said sheet (20) against the substrate (10, 14).

17. A fabrication method according to one of claims 14 to 16, **characterized in that** the sheet (20) is pleated inside openings (12) in the substrate (10, 14) during the shrinkage step.

18. A fabrication method according to one of claims 14 to 17, **characterized in that**, in the fixing step, the reflective sheet (20) is applied in the lengthwise direction of the substrate (10, 14).

19. A fabrication method according to one of claims 14 to 17, **characterized in that** the reflective sheet (20) is applied in a helix around the substrate (10, 14).

20. A fabrication method according to one of claims 14 to 19, **characterized in that**, in the fixing step, the reflective sheet (20) is fixed to the substrate (10, 14) by an adhesive.

21. A fabrication method according to one of claims 14 to 20, **characterized in that** the substrate (10) comprises braided or knitted heat-shrink threads (13) and **in that** during the step of shrinking the substrate (10) the sheath is heated to shrink the heat-shrink threads (13).

## Patentansprüche

1. Wärmeschutzhülle, die ein Substrat (10) und eine an dem Substrat (10, 14) befestigte Folie (20) aus reflektierendem Material besitzt, wobei das Substrat (10, 14) aus einer Ruheposition heraus elastisch verformbar ist, wobei die Folie (20) auf dem Substrat (10, 14) in der Ruheposition Falten bildet, **dadurch gekennzeichnet, dass** die Falten der Folie (20) hinsichtlich ihrer Form und ihrer Orientierung unregelmäßig sind.

2. Schutzhülle nach Anspruch 1, **dadurch gekennzeichnet, dass** das Substrat (10, 14) eine äußere Oberfläche (11) aufweist, die mit Öffnungen (12) versehen ist, wobei die Folie (20) gegenüber dieser Öffnungen (12) Falten bildet.

3. Schutzhülle nach Anspruch 2, **dadurch gekennzeichnet, dass** die Folie (20) innerhalb der Öffnungen (12) Falten bildet.

4. Schutzhülle nach einem der Ansprüche 1 bis 3, **dadurch gekennzeichnet, dass** die Falten der Folie (20) Luftkammern (15) bilden können.

5. Schutzhülle nach einem der Ansprüche 1 bis 4, **dadurch gekennzeichnet, dass** das Substrat (10) aus einem Gewebe gebildet ist und zwischen den Fäden (13) des Gewebes Öffnungen (12) aufweist, wobei die Folie (20) gegenüber den Öffnungen (12) Falten bildet.

6. Schutzhülle nach Anspruch 5, **dadurch gekennzeichnet, dass** das Substrat (10) aus geflochtenen oder gewirkten Fäden (13) gebildet ist.

7. Schutzhülle nach Anspruch 6, **dadurch gekennzeichnet, dass** die Folie (20) aus reflektierendem Material zwischen die geflochtenen oder gewirkten Fäden (13) Falten bildet.

8. Schutzhülle nach einem der Ansprüche 1 bis 4, **dadurch gekennzeichnet, dass** das Substrat ein geringeltes Kunststoffrohr (14) ist.

9. Schutzhülle nach Anspruch 8, **dadurch gekennzeichnet, dass** das geringelte Kunststoffrohr (14) in Längsrichtung geschlitzt ist.

10. Schutzhülle nach Anspruch 8 oder 9, **dadurch gekennzeichnet, dass** die Folie (20) in ringförmigen Hohlräumen (12) des geringeren Rohrs (14) Falten bildet.

11. Schutzhülle nach einem der Ansprüche 1 bis 10, **dadurch gekennzeichnet, dass** das Substrat (10, 14) röhrenförmig ist.

12. Schutzhülle nach einem der Ansprüche 1 bis 11, **dadurch gekennzeichnet, dass** sich das Substrat (10, 14) in longitudinaler und/oder radialer Richtung elastisch ausdehnen kann.

13. Schutzhülle nach einem der Ansprüche 1 bis 12, **dadurch gekennzeichnet, dass** die Folie (20) aus reflektierendem Material ein mit Aluminium beschichtetes Gewebe aus Glasfasern ist.

14. Verfahren zum Herstellen einer Schutzhülle, die ein Substrat (10, 14) und eine Folie (20) aus reflektierendem Material, das an dem Substrat (10, 14) befestigt werden kann, besitzt, **dadurch gekennzeichnet, dass** es die folgenden Schritte umfasst:
- elastisches Ausdehnen des Substrats (10, 14) ausgehend von einer Ruheposition;
- Befestigen der Folie (20) aus reflektierendem Material auf dem ausgedehnten Substrat (10, 14); und
- elastisches Schrumpfen des Substrats (10, 14) in die Ruheposition.

15. Herstellungsverfahren nach Anspruch 14, **dadurch gekennzeichnet, dass** das Substrat (10, 14) in dem Ausdehnungsschritt longitudinal und/oder radial gedehnt wird.

16. Herstellungsverfahren nach einem der Ansprüche 14 oder 15, **dadurch gekennzeichnet, dass** das Schrumpfen des von der Folie (20) aus reflektierendem Material bedeckten Substrats (10, 14) mittels Rollen (22a, 22b), die die Folie (20) gegen das Substrat (10, 14) gepresst halten können, erzwungen wird.

17. Herstellungsverfahren nach einem der Ansprüche 14 bis 16, **dadurch gekennzeichnet, dass** die Folie (20) innerhalb von Öffnungen (12) des Substrats (10, 14) im Schrumpfungsschritt aufgeschrumpft wird.

18. Herstellungsverfahren nach einem der Ansprüche 14 bis 17, **dadurch gekennzeichnet, dass** im Befestigungsschritt die Folie (20) aus reflektierendem Material in Längsrichtung des Substrats (10, 14) aufgebracht wird.

19. Herstellungsverfahren nach einem der Ansprüche 14 bis 17, **dadurch gekennzeichnet, dass** die Folie (20) aus reflektierendem Material schraubenlinienförmig um das Substrat (10, 14) aufgebracht wird.

20. Herstellungsverfahren nach einem der Ansprüche 14 bis 19, **dadurch gekennzeichnet, dass** im Befestigungsschritt die Folie (20) aus reflektierendem Material durch einen Klebstoff auf dem Substrat (10, 14) befestigt wird.

21. Herstellungsverfahren nach einem der Ansprüche 14 bis 20, **dadurch gekennzeichnet, dass** das Substrat (10) geflochtene oder gewirkte wärmeschrumpfbare Fäden (13) umfasst und dass im Schritt des Schrumpfens des Substrats (10) die Hülle erwärmt wird, um die Schrumpfung der wärmeschrumpfbaren Fäden (13) zu erzielen.
